# EUROPÄISCHE PATENTANMELDUNG

(11) **EP 1 752 215 A1**
(43) Veröffentlichungstag der Anmeldung: **14.02.2007**
(21) Anmeldenummer: 05017264.2
(22) Anmeldetag: 09.08.2005
(51) Int. Cl.: B01J 21/06, B01J 35/00, B01J 37/34

(54) **Photokatalysator**

(71) Anmelder: DEGUSSA AG, 40474 Düsseldorf (DE)
(72) Erfinder: Vormberg, Reinhard Dr., 63543 Neuberg (DE); Schumacher, Kai Dt., 65719 Hofheim (DE)

(57) **Zusammenfassung**

Silicium-Titan-Mischoxidpulver mit den folgenden Merkmalen:
- BET-Oberfläche von 5 bis 300 m²/g,
- Siliciumdioxid-Anteil, bezogen auf die Gesamtmenge des Mischoxidpulvers, von ≥ 0,1 bis < 0,5 Gew.-%,
- Titandioxid-Anteil, bezogen auf die Gesamtmenge des Mischoxidpulvers, von ≥ 99,0 Gew.-%,
- Summe der Anteile von Siliciumdioxid und Titandioxid, bezogen auf die Gesamtmenge des Mischoxidpulvers, ≥ 99,5 Gew.-%,
- Titandioxid-Anteil der Primärpartikel umfassend miteinander verwachsene Rutil- und Anatasphasen
- Siliciumdioxid-Anteil der Primärpartikel amorph.

Es wird hergestellt, indem man die Dämpfe einer oder mehrerer, jeweils oxidierbarer und/oder hydrolysierbarer Titan- und Siliciumverbindungen in einer Hochtemperaturzone mit Sauerstoff und/oder Wasserdampf reagieren läßt, das Reaktionsgemisch nach der Reaktion kühlt und den pulverförmigen Feststoff von gasförmigen Stoffen abtrennt.

Dispersion enthaltend das Silicium-Titan-Mischoxidpulver.

Mit dem Silicium-Titan-Mischoxidpulver beschichtetes Substrat.

Verwendung des Silicium-Titan-Mischoxidpulvers, der Dispersion oder des beschichteten Substrates als Photokatalysator.

## Beschreibung

Die Erfindung betrifft ein Silicium-Titan-Mischoxidpulver, dessen Herstellung und Verwendung als Photokatalysator. Die Erfindung betrifft weiterhin eine Dispersion, welche das Silicium-Titan-Mischoxidpulver enthält und ein mit dem Silicium-Titan-Mischoxidpulver beschichtetes Substrat.

Aus EP-A-778812 sind durch Umsetzung von Titantetrachlorid und einem Chlorid von Silicium, Germanium, Bor, Zinn, Niob, Chrom, Aluminium, Gold, Silber, Palladium in einer Flamme erzeugte Titandioxid-Mischoxidpartikel für photokatalytische Verwendungen bekannt. Von besonderer Bedeutung sind dabei Silicium- und Aluminium-Titan-Mischoxidpartikel. Es wird offenbart, dass solche Mischoxidpulver mit einem Gehalt an Siliciumdioxid von ca. 5 bis 10 Gew.-% nicht optimal für photokatalytische Zwecke sind. Weiter wird ausgeführt, dass der Anatas-Gehalt und damit die photokatalytische Aktivität in solchen Mischoxidpulvern mit steigendem Anteil an Siliciumdioxid zunimmt. Aus diesen Aussagen ist zu folgern, dass eine photokatalytische Aktivität erst ab 10 % Siliciumdioxid-Anteil merklich auftritt.

Aus DE-A-10260718 sind mit Siliciumdioxid umhüllte Titandioxidpartikel mit einem Siliciumdioxid-Anteil von 0,5 bis 40 Gew.-% bekannt. Die Partikel weisen eine niedrige photokatalytische Aktivität auf und werden daher bevorzugt in Sonnenschutzformulierungen eingesetzt.

In DE-A-4235996 werden Silicium-Titan-Mischoxidpartikel mit einem Siliciumdioxid-Anteil von 1 bis 30 Gew.-%, bezogen auf das Mischoxid beschrieben. Das Mischoxid weist eine hohe Temperaturbeständigkeit auf, der Siliciumdioxid-Anteil jedoch reduziert die photokatalytische Aktivität.

Aus WO03/037994 sind mit den Oxiden von Silicium, Aluminium, Cer und/oder Zirkon beschichtete Titandioxidpartikel bekannt. Die Beschichtung führt zu einem effektiven Schutz vor photokatalytischen Reaktionen. Die Partikel werden erhalten, indem eine Vorstufe von Siliciumdioxid in Gegenwart eines oberflächenmodifizierenden Stoffes auf Titandioxidpartikel gefällt und gegebenenfalls hydrothermal nachbehandelt werden. Der Anteil von Siliciumdioxid, bezogen auf Titandioxid, beträgt 0,1 bis 10 Gew.-%. Bereits ab 0,1 Gew.-% wird eine merkliche Verringerung der photokatalytischen Aktivität beobachtet.

Aus EP-A-988853 und EP-A-1284277 sind mit Siliciumdioxid umhüllte Titandioxidpartikel bekannt, bei denen eine Siliciumdioxidhülle zu einer Reduzierung der photokatalytischen Aktivität führt. Die Partikel finden daher hauptsächlich in Sonnenschutzformulierungen Verwendung.

Die technische Lehre, die der Stand der Technik vermittelt, ist die, dass Siliciumdioxid-Anteile in Silicium-Titan-Mischoxidpulvern zu einer Verringerung der photokatalytischen Aktivität führen.

Der vorliegenden Erfindung lag die Aufgabe zugrunde die photokatalytische Aktivität eines titandioxid-basierenden Pulvers zu erhöhen.

Gegenstand der Erfindung ist ein Silicium-Titan-Mischoxidpulver, welches folgende Merkmale aufweist:
- BET-Oberfläche von 5 bis 300 m²/g,
- Siliciumdioxid-Anteil, bezogen auf die Gesamtmenge des Mischoxidpulvers, von ≥ 0,1 bis < 0,5 Gew.-%,
- Titandioxid-Anteil, bezogen auf die Gesamtmenge des Mischoxidpulvers, von ≥ 99,0 Gew.-%,
- Summe der Anteile von Siliciumdioxid und Titandioxid, bezogen auf die Gesamtmenge des Mischoxidpulvers, ≥ 99,5 Gew.-%,
- Titandioxid-Anteil der Primärpartikel umfassend miteinander verwachsene Rutil- und Anatasphasen
- Siliciumdioxid-Anteil der Primärpartikel amorph.

Die BET-Oberfläche des erfindungsgemäßen Pulvers wird entsprechend der DIN 66131 bestimmt. In einem bevorzugten Bereich, weist das erfindungsgemäße Mischoxidpulver eine BET-Oberfläche von 30 bis 120 m²/g auf.

Unter Mischoxid ist das Vorliegen von Si-O-Ti-Bindungen zu verstehen, die durch innige Vermischung von Titandioxid und Siliciumdioxid auf atomarer Ebene gebildet werden. Daneben können die Primärpartikel auch Bereiche von Siliciumdioxid neben Titandioxid aufweisen. Weiterhin können einzelne Primärpartikel vollständig aus Titandioxid oder Siliciumdioxid bestehen.

Unter Primärpartikel sind kleinste, nicht ohne das Brechen von chemischen Bindungen weiter zerteilbare Partikel zu verstehen. Diese Primärpartikel können zu Aggregaten verwachsen. Aggregate zeichnen sich dadurch aus, dass ihre Oberfläche kleiner ist als die Summe der Oberflächen der Primärpartikel aus denen sie bestehen. Erfindungsgemäße Pulver mit einer niedrigen BET-Oberfläche können ganz oder überwiegend in Form von nichtaggregierten Primärpartikeln vorliegen, während erfindungsgemäße Pulver mit hoher BET-Oberfläche einen höheren Aggregationsgrad aufweisen oder vollständig aggregiert vorliegen können. Die Primärpartikel des erfindungsgemäßen Mischoxidpulvers weisen keine innere Oberfläche auf.

Durch Auszählung aus TEM-Aufnahmen (TEM = Transmissions-Elektronenmikroskopie) in Verbindung mit EDX (Energy Dispersive X-ray Analysis, energiedispersive Röntgenspektroskopie) wird gefunden, dass Primärpartikel mit Si-O-Ti-Bindungen mit einem Anteil von mindestens 80%, bezogen auf die Gesamtmenge des Titan-Mischoxides, vorliegen. In der Regel beträgt der Anteil mehr als 90%, insbesondere mehr als 95%.

Die Summe der Anteile von Siliciumdioxid und Titandioxid im erfindungsgemäßen Mischoxidpulver beträgt, bezogen auf die Gesamtmenge des Mischoxidpulvers, mindestens 99,5 Gew.-%.

Darüberhinaus kann das erfindungsgemäße Silicium-Titan-Mischoxidpulver Spuren von Verunreinigungen aus den Ausgangsstoffen, wie auch durch den Prozess hervorgerufene Verunreinigungen aufweisen. Diese Verunreinigungen können maximal bis zu 0,5 Gew.-%, in der Regel jedoch nicht mehr als 0,3 Gew.-%, betragen.

Der Siliciumdioxid-Anteil, bezogen auf die Gesamtmenge des erfindungsgemäßen Mischoxidpulvers, beträgt von ≥ 0,1 bis < 0,5 Gew.-%. Siliciumdioxid-Anteile von kleiner als 0,1 Gew.-% zeigen eine vergleichbare Photoaktivität wie eine Probe, die die Merkmale des erfindungsgemäßen Pulvers jedoch ohne Siliciumdioxid aufweist. Bei Siliciumdioxid-Anteilen von mehr als 0,5 Gew.-% ist bereits mit einer abnehmenden Photoaktivität zu rechnen.

Die kristallinen Rutil- und Anatas-Anteile im erfindungsgemäßen Mischoxidpulver können Lichtquanten absorbieren, wodurch ein Elektron aus dem Valenzband in das Leitungsband promoviert wird. Bei Rutil liegt der Abstand zwischen Valenz- und Leitungsband bei 3,05 eV entsprechend einer Absorption bei 415 nm, bei Anatas beträgt der Abstand 3,20 eV entsprechend einer Absorption bei 385 nm Wandern die freien Elektronen an die Oberfläche, können sie dort eine photokatalytische Reaktion auslösen.

Bei dem erfindungsgemäßen Mischoxidpulver liegen Primärpartikel vor, die Rutil- und Anatasphase aufweisen. Dieses Merkmal ist wesentlich für das erfindungsgemäße Mischoxidpulver um eine hohe photokatalytische Aktivität zu erzielen. Einen mögliche Ursache für diesen Effekt könnte sein, dass die von dem Rutil-Anteil aufgefangenen Quanten an den Anatasteil weitergeleitet werden, wodurch die Wahrscheinlichkeit reaktionsfähige Elektronen an der Oberfläche zu generieren, steigt.

Bevorzugterweise ist Anatas die Hauptkomponente. Insbesondere ist ein Rutil-/Anatasverhältnis in einem Bereich von 30/70 bis 5/95 besonders bevorzugt.

Die Struktur des erfindungsgemäßen Silicium-Titan-Mischoxidpulvers kann vielfältig sein. So kann es in aggregierter Form vorliegen oder es können einzelne, nicht aggregierte Primärpartikel vorliegen. Der Siliciumdioxid-Anteil kann statistisch über den Primärpartikel verteilt sein oder in Form einer Hülle um einen Titandioxidkern angeordnet sein. Wenn das erfindungsgemäße Mischoxidpulver in aggregierter Form vorliegt, hat sich als besonders vorteilhaft erwiesen, wenn die Primärpartikel über ihre Siliciumdioxidhülle verwachsen sind.

Ein weiterer Gegenstand der Erfindung ist ein Verfahren zur Herstellung des erfindungsgemäßen Silicium-Titan-Mischoxidpulvers bei dem man die Dämpfe einer oder mehrerer, jeweils oxidierbarer und/oder hydrolysierbarer Titan- und Siliciumverbindungen, entsprechend einem Anteil an Siliciumdioxid von ≥ 0,1 bis < 0,5 Gew.-% und an Titandioxid von ≥ 99,0 Gew.-%, jeweils bezogen auf die Gesamtmenge des Mischoxidpulvers, getrennt oder gemeinsam, in eine Mischkammer überführt und anschließend in einem Reaktionsraum in einer Hochtemperaturzone mit Sauerstoff und/oder Wasserdampf reagieren läßt, das Reaktionsgemisch nach der Reaktion kühlt und den pulverförmigen Feststoff von gasförmigen Stoffen abtrennt.

In einer bevorzugten Ausführungsform der Erfindung wird die Hochtemperaturzone durch eine Flamme gebildet, die aus der Reaktion eines sauerstoffhaltigen Gases mit einem wasserstoffhaltigen Brenngas hervorgeht. Als sauerstoffhaltiges Gas ist vor allem Luft (Primärluft) und mit Sauerstoff angereicherte Luft geeignet. Als Brenngase sind vor allem Wasserstoff, Methan, Ethan, Propan, Butan und/oder Erdgas geeignet. Dem Fachmann ist bekannt, wie er die Flammentemperatur variieren kann. Die Zusammensetzung der Flamme wird bevorzugt so gewählt, dass die Hochtemperaturzone eine Temperatur von 900 bis 1600 K aufweist.

Dem Fachmann sind weiterhin Flammentypen bekannt, die zur Durchführung des erfindungsgemäßen Verfahrens geeignet sind, wie zum Beispiel laminare oder turbulente Flammen, vorgemischte Flammen oder Diffusionsflammen, Niederdruck-oder Hochdruckflammen, Flammen mit einer Ausbreitung unterhalb, mit oder oberhalb der Schallgeschwindigkeit, pulsierende oder kontinuierliche Flammen, externe Flammen, reduzierende oder oxidierende Flammen, sekundäre Flammen, geschlossene oder offene Flammen, extern beheizte oder extern gekühlte Flammen, Flammen aus einem oder mehreren Brennern oder eine Mischform der vorgenannten Flammentypen.

Die gemäß dem erfindungsgemäßen Verfahren eingesetzte hydrolysierbare und/oder oxidierbare Titanverbindung kann eine metallorganische oder anorganische Verbindung sein. Geeignete metallorganische Verbindungen können Titanalkoxide oder Titancarboxylate sein. Bevorzugt sind jedoch anorganische Verbindungen, insbesondere TiCl₄.

Die gemäß dem erfindungsgemäßen Verfahren eingesetzte hydrolysierbare und/oder oxidierbare Verbindung kann eine metallorganische oder anorganische Verbindung sein. Geeignete Verbindungen können CH₃SiCl₃, (CH₃)₂SiCl₂, (CH₃)₃SiCl, (CH₃)₄Si, HSiCl₃, (CH₃)₂HSiCl, CH₃C₂H₅SiCl₂, SiCl₄ und deren Gemische sein. Bevorzugt ist SiCl₄.

Bevorzugterweise verdampft man die Titanverbindung und die Siliciumverbindung bei Temperaturen von 200°C oder weniger, vermischt die Dämpfe mit einem wasserstoffhaltigen Brenngas und Luft oder mit Sauerstoff angereicherter Luft, entzündet das Gemisch und läßt es in den Reaktionsraum hinein verbrennen.

Weiterhin kann das erfindungsgemäße Verfahren so ausgeführt werden, dass zusätzlich ein sauerstoffenthaltendes Gas an einer oder mehreren Stellen in den Reaktionsraum geführt werden.

Ein weiterer Gegenstand der Erfindung ist eine Dispersion, welche das erfindungsgemäße Silicium-Titan-Mischoxidpulver enthält. Die flüssige Phase der Dispersion kann Wasser und/oder ein organisches Lösungsmittel oder Lösungsmittelgemisch sein. Der Gehalt an dem erfindungsgemäßen Silicium-Titan-Mischoxidpulver in der Dispersion kann bis zu 70 Gew.-% betragen. Die Dispersion kann weiterhin dem Fachmann bekannte Additive zur Einstellung des pH-Wertes sowie oberflächenaktive Stoffe enthalten. Die Herstellung der Dispersion kann mit den bekannten Dispergieraggregaten durchgeführt werden. Es eignen sich insbesondere Dissolver, Ultraschall und Rotor-Stator-Maschinen.

Ein weiterer Gegenstand der Erfindung ist ein beschichtetes Substrat, bei dem das erfindungsgemäße Silicium-Titan-Mischoxidpulver Teil der Beschichtung ist oder das Substrat vollständig mit dem erfindungsgemäßen Pulver beschichtet ist. Das beschichtete Substrat kann erhalten werden, indem man eine Dispersion, welche das erfindungsgemäße Silicium-Titan-Mischoxidpulver enthält, auf ein Substrat, beispielsweise Glas oder ein Polymer, aufbringt und nachfolgend thermisch behandelt. Das Aufbringen der Dispersion kann durch Tauchbeschichtung, Streichen, Sprühen und/oder Rakeln erfolgen. Die thermische Behandlung kann zum Beispiel durch Tempern im Ofen, Flammensintern und/oder Lasersintern erfolgen.

Ein weiterer Gegenstand der Erfindung ist die Verwendung des erfindungsgemäßen Silicium-Titan-Mischoxidpulvers, einer Dispersion hiermit oder eines mit dem erfindungsgemäßen erfindungsgemäßen Silicium-Titan-Mischoxidpulver beschichteten Substrates als Photokatalysator.

### Beispiele

### A. Herstellung der Pulver

Beispiel 1: Es werden 4,1 kg/h TiCl₄ und 0,05 kg/h SiCl₄ verdampft. Die Dämpfe werden mittels Stickstoff zusammen mit 2,0 Nm³/h Wasserstoff und 9,1 Nm³/h getrockneter Luft in der Mischkammer eines Brenners bekannter Bauart gemischt, und über ein Zentralrohr, an dessen Ende das Reaktionsgemisch gezündet wird, einem wassergekühlten Flammrohr zugeführt und dort verbrannt.

Das entstandene Pulver wird anschließend in einem Filter abgeschieden. Durch eine Behandlung des Pulvers mit feuchter Luft bei ca. 500-700°C wird anhaftendes Chlorid entfernt.

Das Beispiel 2 wird analog Beispiel 1 durchgeführt. Die Ansatzgrößen und die experimentellen Bedingungen der Beispiele 1 und 2 sind in Tabelle 1, die physikalischchemischen Eigenschaften der Pulver sind in Tabelle 2 wiedergegeben.

TEM-Auswertungen der Pulver der Beispiele 1 und 2 zeigen weitgehend aggregierte Pulver mit vollständiger Siliciumdioxidhülle und einem Titandioxidkern.

Pulver 3 und 4 sind flammenhydrolytisch aus TiCl₄ hergestellte Titandioxidpulver.

### B. Photokatalytische Aktivität

Die erfindungsgemäßen Silicium-Titan-Mischoxidpulver der Beispiele 1 und 2 sowie die Titandioxidpulver 3 und 4 als Vergleichsproben werden hinsichtlich ihrer photokatalytischen Aktivität bezüglich des Fettsäureabbaus untersucht.

Als Testsubstanz wird Stearinsäuremethylester (kurz: Methylstearat), gelöst in n-Hexan, eingesetzt. Da diese Substanz für die Aktivitätstests als dünner Fettfilm auf die zu testende Oberfläche aufgetragen wird, wird zunächst aus den Pulvern 1 bis 4 eine Schicht auf dem Trägermaterial Glas hergestellt.

Hierzu wird eine Dispersion aus je 120 mg der Pulver 1 bis 4 in 2 ml Isopropanol hergestellt und auf eine Glasfläche von 4 x 9 cm aufgetragen. Die Schichten werden anschließend bei 100°C für 60 min im Muffelofen getempert.

Auf die erhaltenen Schichten wird eine definierte Menge einer Methylstearat-Lösung (5 mmol/l) in n-Hexan aufgetragen und diese zunächst für 15 Minuten mit 1,0 mW/cm² UV-A Licht bestrahlt.

Für die Bestimmung werden je ca. 500 µl einer Methylstearat-Lösung (5 mmol/l) in n-Hexan auf die Mischoxid-Schichten aufgetragen , so dass sich bezogen auf die Abwaschmenge (5ml n-Hexan) eine Konzentration von ca. 0,5 mmol/l ergibt. Die mittels Gaschromatographie (FID) ermittelten Werte finden sich in Tabelle 3.

Nach Ende der Bestrahlung wird das auf den Mischoxid-Schichten verbliebene Methylstearat mit 5 ml n-Hexan abgewaschen und mit Hilfe der Gaschromatographie (FID) mengenmäßig bestimmt.

Der Vergleich mit einem zuvor ermittelten Referenzwert, bestimmt durch Auftragen der definierten Menge Methylstearat und sofortiges Abwaschen der Methylstearatschicht mit n-Hexan ohne vorherige Bestrahlung, gibt Aufschluss über die photokatalytische Aktivität der Schichten.

Tabelle 3 zeigt die verbliebene Menge Methylstearat auf den TiO₂-Schichten nach 5 min Bestrahlung mit 1,0 mW/cm² UV-A Licht.

Als Referenz- bzw. Kontroll-Versuch wurde zum Abbau von Methylstearat exemplarisch das erfindungsgemäße Pulver 2 ein "Dunkelversuch" eingesetzt.

Nach Auftragen von 500 µl der (Methylstearat in n-Hexan)-Lösung werden die Schichten für 1 Stunde in Dunkelheit verwahrt. Anschließend werden die Schichten mit 5 ml n-Hexan abgewaschen und die Methylstearatkonzentration mit Hilfe der Gaschromatographie bestimmt. Die Abbaurate ist mit 40 µM/h vernachlässigbar.

Die Bestimmung der Photoneneffizienz ist mit einem Fehler von max. 10% behaftet. Somit liegt die Abweichung des Dunkelversuchswertes zur Ausgangskonzentration (Referenzwert) im Rahmen der Messungenauigkeit. Folglich kann man die Abbauraten direkt in die entsprechenden Photoneneffizienzen umrechnen. Berechnungsgrundlage sind die Anfangsabbauraten der einzelnen Proben, also jeweils die nach der kürzesten Bestrahlungszeit bestimmten Raten.

Berechnung der Photoneneffizienz für Beispiel 3:
Photonenfluss bei 350nm, 36 cm2 bestrahlter Fläche und 1,0
mW/cm²: 3,78*10⁻4 mol*hv*h-1
Analysiertes Volumen: 5 ml = 0,005 1
Abbaurate: 1520 µM/h * 0,005 1 = 7, 6*10⁻⁶ mol*h⁻¹
Photoneneffizienz = Abbaurate * Photonenfluss
Photoneneffizienz = 7, 6*10⁻⁶ molh⁻¹ * 3,78*10⁻⁴ mol*hν*h⁻¹ = 2,01 x 10⁻² = 2,01 %

Die Berechnung der Photoneneffizienz der Pulver der Beispiele 1,2 und 4 erfolgt analog. Die Ergebnisse sind in Tabelle 2 wiedergegeben.

Die Ergebnisse zeigen, dass die photokatalytische Aktivität der erfindungsgemäßen Silicium-Titan-Mischoxidpulver höher ist als bei Titandioxidpulvern mit vergleichbaren Merkmalen und vergleichbarem Herstellungsverfahren.

**Tabelle 1: Experimentelle Bedingungen bei der Herstellung der erfindungsgemäßen Pulver 1 und 2**

| **Beispiel** | | **1** | **2** |
|---|---|---|---|
| TiCl₄ | kg/h | 4,1 | 4,1 |
| SiCl₄ | kg/h | 0,05 | 0,05 |
| H₂ | Nm³/h | 2, 0 | 2,0 |
| Luft | Nm³/h | 9, 1 | 14,0 |
| Sekundärluft | Nm³/h | 15 | 15 |

**Tabelle 2: Analytische Daten der Pulver 1 bis 4**

| | | **gemäß Erfindung** | | **Vergleich** | |
|---|---|---|---|---|---|
| **Beispiel** | | **1** | **2** | **3** | **4** |
| TiO₂-Gehalt | Gew.-% | 99,41 | 99,46 | > 99,5 | > 99,5 |
| SiO₂-Gehalt | Gew.-% | 0,41 | 0,45 | < 0,002 | < 0,002 |
| BET | m²/g | 48 | 83 | 50 | 90 |
| Rutil/Anatas | | 39/61 | 24/76 | 20/80 | 10/90 |
| Photoneneffizienz | % | 3,3 | 5,2 | 2,01 | 4,4 |
| Photoaktivität*) | | 1,64 | 2,59 | 1 | 2,19 |

| | | | | | |
|---|---|---|---|---|---|
| *)bezogen auf Aeroxide® TiO₂ P25, Degussa = 1; | | | | | |

**Tabelle 3: Abbauraten von Methylstearat**

| **Beispiel** | | **1** | **2** | **3** | **4** |
|---|---|---|---|---|---|
| C₀ Methylstearat | mmol/l | 0,46 | 0,48 | 0,43 | 0,4 |
| C₅ₘᵢₙ Methylstearat | mmol/l | 0,27 | 0,13 | 0,05*) | 0,12 |
| Abbaurate Methylstearat | µmol/ lxh | 2520 | 3960 | 1520 | 3360 |

| | | | | | |
|---|---|---|---|---|---|
| *) c₁₅ₘᵢₙ anstelle von c₅ₘᵢₙ; | | | | | |

## Patentansprüche

1. Silicium-Titan-Mischoxidpulver, **dadurch gekennzeichnet, dass** es die folgenden Merkmale aufweist:
- BET-Oberfläche von 5 bis 300 m²/g,
- Siliciumdioxid-Anteil, bezogen auf die Gesamtmenge des Mischoxidpulvers, von ≥ 0,1 bis < 0,5 Gew.-%,
- Titandioxid-Anteil, bezogen auf die Gesamtmenge des Mischoxidpulvers, von ≥ 99,0 Gew.-%,
- Summe der Anteile von Siliciumdioxid und Titandioxid, bezogen auf die Gesamtmenge des Mischoxidpulvers, ≥ 99,5 Gew.-%,
- Titandioxid-Anteil der Primärpartikel umfassend miteinander verwachsene Rutil- und Anatasphasen
- Siliciumdioxid-Anteil der Primärpartikel amorph.

2. Silicium-Titan-Mischoxidpulver nach Anspruch 1, **dadurch gekennzeichnet, dass** die BET-Oberfläche 30 bis 120 m²/g beträgt.

3. Silicium-Titan-Mischoxidpulver nach den Ansprüchen 1 oder 2, **dadurch gekennzeichnet, dass** das Verhältnis Rutil/Anatas 30:70 bis 5:95 beträgt.

4. Verfahren zur Herstellung des Silicium-Titanmischoxidpulvers gemäß der Ansprüche 1 bis 3, **dadurch gekennzeichnet, dass** man die Dämpfe einer oder mehrerer, jeweils oxidierbarer und/oder hydrolysierbarer Titan- und Siliciumverbindungen, entsprechend einem Anteil an Siliciumdioxid von ≥ 0,1 bis < 0,5 Gew.-% und an Titandioxid von ≥ 99,0 Gew.-%, jeweils bezogen auf die Gesamtmenge des Mischoxidpulvers, getrennt oder gemeinsam, in eine Mischkammer überführt und anschließend in einem Reaktionsraum in einer Hochtemperaturzone mit Sauerstoff und/oder Wasserdampf reagieren läßt, das Reaktionsgemisch nach der Reaktion kühlt und den pulverförmigen Feststoff von gasförmigen Stoffen abtrennt.

5. Verfahren nach Anspruch 4, **dadurch gekennzeichnet, dass** die Hochtemperaturzone eine Flamme, gebildet durch Reaktion eines sauerstoffhaltigen Gases (Primärluft) mit einem wasserstoffhaltigen Brenngas, ist.

6. Verfahren nach Anspruch 5, **dadurch gekennzeichnet, dass** die Zusammensetzung der Flamme so gewählt wird, dass die Hochtemperaturzone eine Temperatur von 900 bis 1600 K aufweist.

7. Verfahren nach den Ansprüchen 5 oder 6, **dadurch gekennzeichnet, dass** die Titanverbindung Titantetrachlorid ist.

8. Verfahren nach den Ansprüchen 5 bis 7, **dadurch gekennzeichnet, dass** die Siliciumverbindung Siliciumtetrachlorid ist.

9. Verfahren nach den Ansprüchen 5 bis 8, **dadurch gekennzeichnet, dass** man die Titanverbindung und die Siliciumverbindung bei Temperaturen von 200°C oder weniger verdampft, die Dämpfe mit einem wasserstoffhaltigen Brenngas und Luft oder mit Sauerstoff angereicherter Luft vermischt, das Gemisch entzündet und in einen Reaktionsraum hinein verbrennen läßt.

10. Dispersion enthaltend das Silicium-Titan-Mischoxidpulver gemäß der Ansprüche 1 bis 4.

11. Beschichtetes Substrat mit dem Silicium-Titan-Mischoxidpulver gemäß der Ansprüche 1 bis 4 als Beschichtung oder Beschichtungsbestandteil.

12. Verwendung des Silicium-Titan-Mischoxidpulvers gemäß der Ansprüche 1 bis 4 als Photokatalysator.

13. Verwendung der Dispersion gemäß des Anspruches 13 als Photokatalysator.

14. Verwendung des beschichteten Substrates gemäß des Anspruches 14 als Photokatalysator.
